# EUROPEAN PATENT SPECIFICATION

(11) **EP 1 729 998 B1**
(45) Date of publication and mention of the grant of the patent: **23.04.2008**
(21) Application number: 05722218.4
(22) Date of filing: 16.03.2005
(51) Int. Cl.: B60N 2/48

(54) **A HEADREST FOR A VEHICLE SEAT, WITH A LOWERED POSITION AND A REST POSITION**
KOPFSTÜTZE FÜR EINEN FAHRZEUGSITZ MIT EINER ABGESENKTEN POSITION UND EINER RUHEPOSITION
APPUIE-TETE POUR SIEGE DE VEHICULE AYANT UNE POSITION ABAISSEE ET UNE POSITION DE REPOS

(30) Priority: 17.03.2004 SE 0400666
(43) Date of publication of application: 13.12.2006
(73) Proprietor: Kongsberg Automotive AB, 565 28 Mullsjö (SE)
(72) Inventor: BLOMQVIST, Per-Olof, S-565 33 Mullsjö (SE); BROLIN, Hans, S-565 31 Mullsjö (SE)
(74) Representative: Andersson, Per Rune
(86) International application number: PCT/SE2005/000372
(87) International publication number: WO 2005/087538

(56) References cited:
- EP-A1- 1 316 471
- EP-A2- 0 873 904
- EP-A2- 1 190 893
- DE-A1- 10 236 259
- GB-A- 2 012 570
- US-B1- 6 302 485

## Description

### TECHNICAL FIELD

The present invention relates to a headrest for a vehicle seat, according to claim 1.

### BACKGROUND

In motor vehicles such as cars, lorries, etc., the seats are in principle always provided with a dedicated headrest, in other words a rest extending upwards from the back of the seat so that the person sitting in the seat can lean his or her head against the rest. Another function of the rest is to take up forces in the event of a collision or sharp braking.

In many vehicles, the passenger seats can be folded down to provide more storage space. The back of the seat is usually folded forwards, in other words towards the seats in front. A problem in this connection is the headrest, because it may strike against the seat in front and thus prevent complete lowering of the back of the seat.

A number of solutions to this problem have been disclosed, for example the headrest can be removed when folding the seat down. Another solution is that the headrest can be folded forwards relative to the back of the seat so that an L-shaped configuration is obtained. When the back of the seat is then folded forwards, the headrest comes to lie at the place where a passenger has had his or her feet, and a substantially level storage area can be obtained.

A requirement of a headrest for a vehicle seat is therefore that it should be able to be folded down in the manner described above. The headrest, in its normal, raised position, must also be able to take up the forces which occur in the event of a collision, for example, or in the event of sharp braking, which means that the headrest must be relatively solidly fixed in this position. This goes against the requirement that the headrest should be able to be varied, by application of manual force, between a number of different "comfort positions", so as to satisfy the needs of different passengers for different positions.

### DISCLOSURE OF THE INVENTION

There is therefore a requirement for a headrest of a vehicle seat which can adopt, on the one hand, a raised position and, on the other hand, a lowered position, the headrest, at least in the raised position, being able to take up considerable forces, while at the same time the headrest, in its normal, raised position, can be varied manually between a number of different comfort positions.

This requirement is satisfied by the present invention by virtue of the fact that it proposes a headrest for a vehicle seat according to claim 1.

The use of two shafts means that the headrest can be locked relatively fixedly in the positions it can adopt around the first shaft, while at the same time the headrest can be moved around the second shaft manually and can thus be steplessly adjusted to different "comfort positions" between the two end positions.

The headrest comprises an outer casing and a plate arranged inside the casing, which plate is acted upon by locking and unlocking of a locking mechanism to allow the movements of the headrest around the first shaft but not around the second shaft, the outer casing being arranged to follow also the movements around the second shaft. This means that the plate will provide the outer casing with a front stop position and a rear stop position corresponding to first and second end positions during turning of the outer casing around the second shaft.

### BRIEF DESCRIPTION OF THE FIGURES

The invention is described in more detail below with reference to the attached figures, where
Fig. 1 shows a cutaway view of a headrest according to the invention, and
Fig. 2 shows a cross section from the side of a headrest according to the invention.

### EMBODIMENTS

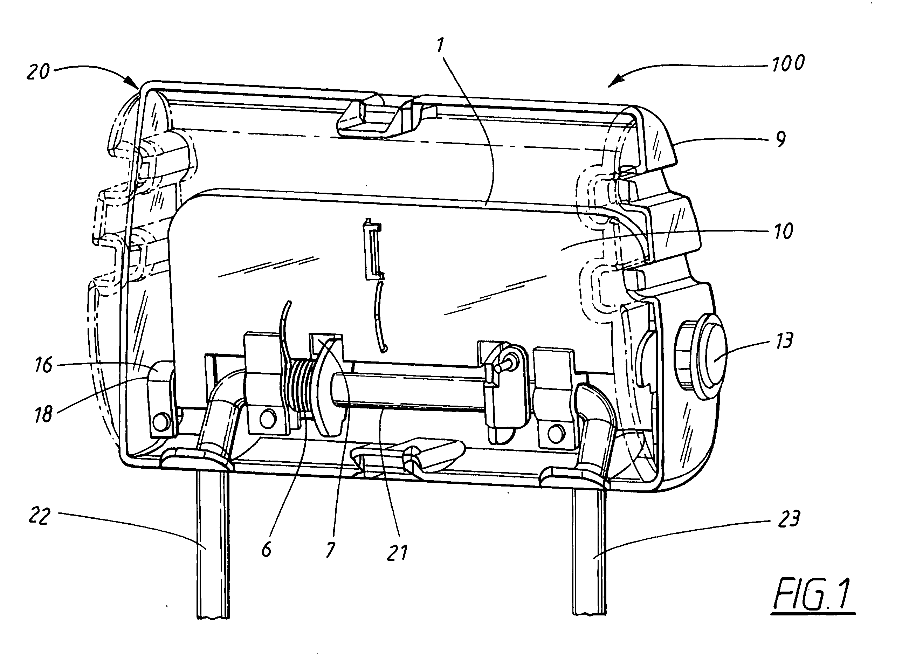

Fig. 1 shows a cutaway view of a headrest 100 according to the invention. The headrest in Fig. 1 has, on the one hand, the functions covered by the present invention and, on the other hand, functions which are already known from before. To make the invention as a whole easier to understand, certain known aspects of the function of the headrest will also be discussed below by way of introduction.

As is shown In Fig, 1, the headrest comprises an outer casing 20, which has been partially removed in the drawing in order to facilitate understanding of the function of the headrest. The casing is preferably made of a material which takes up forces, and it comprises, for example, a front part 9 and a rear part 10 which together form the casing 20.

The casing 20 encloses a mechanism which permits a number of functions of the headrest 100: a first shaft 21 runs inside the casing in a direction which substantially coincides with the transverse direction in an imagined vehicle. In a preferred embodiment, this first shaft 21 comprises the crosspiece of a bracket around which or over which the casing is arranged. The two legs 22, 23 of the bracket thus run into the casing 20, and the crosspiece connects the two legs under the casing, while at the same time the crosspiece constitutes said first shaft 21 in the headrest 100.

The headrest 100 can adopt two positions around said first shaft 21, on the one hand a substantially upright position which is shown in Fig. 1, and, on the other hand, a lowered position. In its lowered position, the headrest comes to point forwards, more or less at right angles with respect to the back of the seat, which means that if the back of the seat on which the headrest sits is folded forwards, the headrest will be located in the place where a passenger has normally had his or her feet. With the back of the seat folded down and the headrest lowered, a substantially level loading area can be created. Another reason for wanting to be able to tum the headrest sharp forward relative to the back of the seat is to improve the rear view when reversing.

The headrest comprises a locking mechanism which is used for locking or unlocking so as to prevent or permit, respectively, turning of the headrest to the forwardly turned position. The locking mechanism as such is known and is described in Swedish patent 520 924, and it will therefore only be described in outline in this text.

Arranged inside the casing 20 there is a plate 1 which is secured so as to be pivotable around the first shaft 21, and the plate 1 is substantially parallel to the casing 20. A spring 6, which is also secured around the first shaft 21, presses against the plate 1 so as to bring said plate 1 and, consequently, the entire headrest 100 to the forwardly turned position.

A locking panel 7 resists the action of the spring 6 on the plate 1, With the aid of a button 13 which is accessible from the outside of the casing, the locking panel 7 can be moved along the first shaft 21, by which means the headrest is turned. The headrest is returned to the raised position by manual force, the spring-loaded locking plate 7 entering a groove in a segment and locking the headrest in the upright position.

In summary, the known locking mechanism in other words allows the headrest 100 to be moved between two positions around the first shaft 21, and it locks the headrest in the upright position of its two possible positions. The two positions are the raised position and the lowered position. In the raised position, the locking mechanism has to hold the headrest relatively fixedly in view of the function of the headrest in the event of collisions or sharp braking, for example.

For enhanced comfort, the present invention also aims to make it possible to vary the headrest in a substantially stepless manner between two end positions in the same direction of movement (forward and backward) in which the headrest is able to be turned about the first shaft. With this aim in mind, the arrangement also comprises a second shaft 18 around which the outer casing 20 can be turned.

The second shaft is secured in the lower outer edge of said plate 1, preferably in such a way that the second shaft 18 is concentric with the first shaft 21. Concentric means here that the midpoints of both shafts or an imagined continuation of their centre lines coincide with each other.

In a particularly preferred embodiment, the second shaft 18 is in two parts and comprises a first part 18 on one side of the imagined continuation of said first shaft, and a second part (not shown in Figure 1) on the other side of the imagined continuation of said first shaft 21, both the parts of the second shaft being concentric with the first shaft.

As has been mentioned, the second shaft 18 is arranged in or on the plate 1 situated inside the casing 20, which means that the outer edge/edges of the plate 1 form an "elbow" level with the first shaft 21. Of course, there are a great many ways of arranging the second shaft in or on the plate, but in a preferred embodiment the plate 1 is cast in plastic and the second shaft 18 is made of steel, one end of the second shaft being cast into the plate during production, and the other end sticking out from the side edge of the plate and forming said "elbow". If the second shaft is in two parts, then two "elbows" are formed, one at each of the outer edges of the plate.

Only one part of the second shaft 18 is described below, but it will be appreciated that, if the second shaft is in two parts, the following description applies to both parts.

The second end of the second shaft, in other words the part not secured on the plate 1, therefore protrudes from the plate, This second part of the second shaft is preferably secured in the casing with the aid of a clip 16, in other words an arrangement which grips round all or part of the periphery of the shaft 18, or secures the shaft so fixedly that it cannot move freely, but can still be turned by manual force. The edges of the part of the clip 16 bearing against the second shaft 18 preferably have the same configuration as the second shaft, in other words a circular shape, with a radius slightly less than that of the second shaft, which is what secures the second shaft in the clip. The clip 16 is preferably secured in the inside of the casing 20.

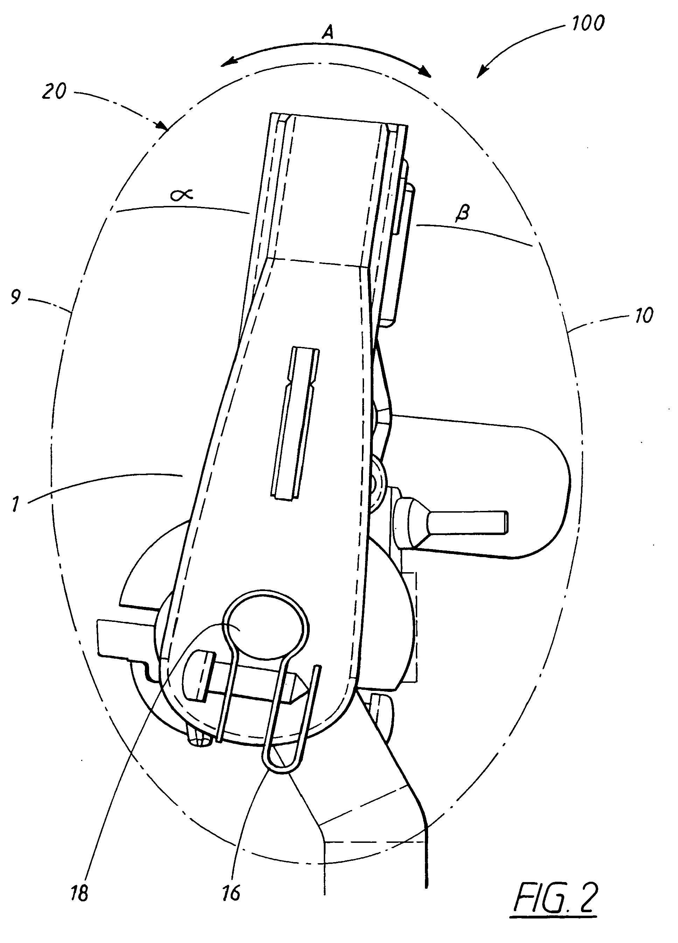

Fig. 2 shows a cross section through the second shaft 18 of a headrest 100 with an arrangement according to the invention, in which the casing 20 is indicated as an oval. The drawing illustrates a principle on which the invention is based: The casing 20 is arranged in such a way that it can be turned forwards and rearwards around the second shaft 18 by manual force, these movements being shown by the double arrow A in Fig. 2. Since the plate 1 arranged inside the casing 20 cannot move around the second shaft 18 but only around the first shaft, around which it is locked in a raised position, the plate 1 will not follow the movements of the casing 20 around the second shaft 18. This means that the plate 1 will form a natural stop for the movements of the casing 20 forwards and backwards around the second shaft 18, these movements being shown by the double arrow A in Fig. 2.

Upon a forward movement of the casing 20 (in the direction of travel of an imagined vehicle), the rear main surface 10 of the casing will receive the plate 1, and, upon a rearward movement, the front main surface 9 of the casing will receive the plate 1.

Two angles are thus obtained, indicated as α and β in Fig. 2, where α is the angle by which the casing 20 can be moved backwards, and β is the angle by which the casing 20 can be moved forwards relative to a nominal centre position in which the casing 20 is substantially parallel to the plate 1.

As has been mentioned, with the described configuration of the clip 16, the casing 20 can be moved steplessly between the angles α and β, since the clip 16 has been given such a strength that it can take up the forces which occur when a head is inclined against the casing.

Despite the fact that it is the casing 20 that executes the main movement upon displacements around the second shaft 18, the person sitting in a seat equipped with a headrest 100 according to the invention will feel that it is the whole headrest 100 that is making the movement between the different comfort positions.

## Claims

1. Headrest (100) for a vehicle seat, comprising a first shaft (21) around which the headrest (100) can be turned to bring it from a raised position into a lowered position, and a locking mechanism which locks or unlocks to prevent or permit, respectively, said turning of the headrest (100), **characterized in that** the headrest (100) comprise an outer casing (20) and a plate (1) arranged inside the casing, and a second shaft (18) around which the outer casing (20) can be turned relative to the plate (1) between a first end position and a second end position, **in that** the first shaft (21) and second shaft (18) are concentric with one another, and **in that** the second shaft (18) extends outside the first shaft, in the imagined continuation of the first shaft.

2. Headrest (100) according to claim 1, wherein said plate (1) is acted upon by the locking or unlocking of said locking mechanism and is entrained in the movements (100) of the headrest around the first shaft (21).

3. Headrest (100) according to claim 2, in which the second shaft (18) has a first portion and a second portion, one of said portions extending on either side of the first shaft, in the imagined continuation of the first shaft.

## Patentansprüche

1. Kopfstütze (100) für einen Fahrzeugsitz mit einer ersten Achse (21), um die die Kopfstütze (100) gedreht werden kann, um sie aus einer angehobenen Position in eine abgesenkte Position zu bringen, und einem Verriegelungsmechanismus, der verriegelt oder entriegelt, um das Drehen der Kopfstütze (100) zu verhindern bzw. zu ermöglichen, **gekennzeichnet dadurch, daß** die Kopfstütze (100) ein Außengehäuse (20) und eine innerhalb des Gehäuses angeordnete Platte (1) sowie eine zweite Achse (18) aufweist, um die das Außengehäuse (20) relativ zur Platte (1) zwischen einer ersten Endposition und einer zweiten Endposition gedreht werden kann, **dadurch**, daß die erste Achse (21) und zweite Achse (18) miteinander konzentrisch sind, und **dadurch**, daß sich die zweite Achse (18) außerhalb der ersten Achse in der gedachten Fortsetzung der ersten Achse erstreckt.

2. Kopfstütze (100) nach Anspruch 1, wobei auf die Platte (1) durch das Verriegeln oder Entriegeln des Verriegelungsmechanismus eingewirkt und sie in den Bewegungen (100) der Kopfstütze um die erste Achse (21) mitgeführt wird.

3. Kopfstütze (100) nach Anspruch 2, wobei die zweite Achse (18) einen ersten Abschnitt und einen zweiten Abschnitt hat, wobei sich einer der Abschnitte auf einer Seite der ersten Achse in der gedachten Fortsetzung der ersten Achse erstreckt.

## Revendications

1. Appuie-tête (100) pour un siège de véhicule, comprenant une première tige (21) autour de laquelle l'appuie-tête (100) peut être tourné pour l'amener d'une position surélevée à une position abaissée, et un mécanisme de verrouillage qui se verrouille ou se déverrouille pour empêcher ou permettre, respectivement, ladite rotation de l'appuie-tête (100), **caractérisé en ce que** l'appuie-tête (100) comprend un boîtier externe (20) et une plaque (1) agencée à l'intérieur du boîtier, et une seconde tige (18) autour de laquelle le boîtier externe (20) peut être tourné par rapport à la plaque (1) entre une première position d'extrémité et une seconde position d'extrémité, **en ce que** la première tige (21) et la seconde tige (18) sont concentriques l'une par rapport à l'autre, et **en ce que** la seconde tige (18) s'étend vers l'extérieur du premier arbre, dans le prolongement imaginé du premier arbre.

2. Appuie-tête (100) selon la revendication 1, dans lequel ladite plaque (1) est actionnée par le verrouillage ou le déverrouillage dudit mécanisme de verrouillage et est entraînée dans les déplacements (100) de l'appuie-tête autour de la première tige (21).

3. Appuie-tête (100) selon la revendication 2, dans laquelle la seconde tige (18) présente une première partie et une seconde partie, une desdites parties s'étendant sur chaque côté de la première tige, dans le prolongement imaginé de la première tige.
